# EUROPÄISCHE PATENTSCHRIFT

(11) **EP 0 429 942 B1**
(45) Veröffentlichungstag und Bekanntmachung des Hinweises auf die Patenterteilung: **06.07.1994**
(21) Anmeldenummer: 90121678.8
(22) Anmeldetag: 13.11.1990
(51) Int. Cl.: B01D 53/18, B01D 47/10

(54) **Vorrichtung für den Stoffaustausch zwischen einem heissen Gasstrom und einer Flüssigkeit**
Apparatus for material exchange between a current of hot gas and a liquid
Appareil pour l'échange d'une matière entre un courant gazeux chaud et un liquide

(30) Priorität: 25.11.1989 DE 3939057
(43) Veröffentlichungstag der Anmeldung: 05.06.1991
(73) Patentinhaber: BAYER AG, 51368 Leverkusen (DE); KÖRTING HANNOVER AG, D-30453 Hannover (DE)
(72) Erfinder: Hüning, Werner, Dr., W-5068 Odenthal (DE); Gockel, Claus, W-5068 Odenthal (DE); Richter, Georg, W-3054 Apelern (DE); Biester, Werner, W-4010 Hilden (DE)

(56) Entgegenhaltungen:
- DE-A- 2 150 835
- FR-A- 1 213 375
- US-A- 3 388 897
- US-A- 3 618 908

## Beschreibung

Die Erfindung betrifft eine Vorrichtung für den Stoffaustausch zwischen einem heißen Gasstrom und einer Flüssigkeit, bei der die Flüssigkeit in den heißen Gasstrom eingespritzt wird. Die Vorrichtung besteht prinzipiell aus einem Gaszuführungsrohr, das vertikal in eine gegenüber dem Gaszuführungsrohr erweiterte und sich in Strömungsrichtung konisch verengende koaxial dazu angeordnete Einspritzkammer mündet, deren Oberteil durch ein ringförmiges, mit dem Gaszuführungsrohr verbundenes Dach, mit darin eingesetzten Flüssigkeitsdüsen gebildet wird, und einem an die Einspritzkammer koaxial anschließenden Wärme- und Stoffaustauschkanal, wobei in Verlängerung des Gaszuführungsrohres ein Gasschürzenrohr in die Eintrittskammer hineinragt.

Eine derartige Vorrichtung ist aus US-A-3 388 897 bekannt. Dabei geht es in erster Linie um die Trennung und Abscheidung von Partikeln, die mit dem heißen Gasstrom mitgeführt werden.

Weiterhin sind aus DE-A 2 150 835 und DE-A 2 303 131 ähnlich aufgebaute Vorrichtungen bekannt, die es ermöglichen, industrielle Abgase mit einer Waschflüssigkeit zu behandeln.

Weiterhin sind aus DE-A 2 150 835 und DE-A-2 303 131 ähnlich aufgebaute Vorrichtungen bekannt, die es ermöglichen, industrielle Abgase mit einer Waschflüssigkeit zu behandeln.

Mit derartigen Vorrichtungen soll neben der Adsorbtion von Schadstoffen und der Einbindung von Staubteilchen häufig auch eine Kühlung des Gasstromes erreicht werden.

Bei der Behandlung heißer Gase erweist sich die Übergangszone von Wandteilen, die dem trockenen heißen Gas ausgesetzt sind, zu Wandteilen, die mit Flüssigkeit benetzt oder besprüht werden, als stark korrosionsgefährdet. Dieser kritische Nachteil tritt in besonders starkem Maße auf, wenn die Benetzungsgrenze infolge von Instabilitäten in den Flüssigkeitsstrahlen oder der Gasströmung oder aber auch durch Laständerungen in dem zu behandelnden Gasstrom hin- und herwandert. Gravierende Korrosionseffekte werden ferner beobachtet, wenn kalte Flüssigkeitstropfen im Gaszuführungsrohr aufsteigen und auf die heiße Innenwand des Rohres auftreffen. An diesen Stellen erfolgt aufgrund des Thermoschocks eine starke Materialerosion, die ebenfalls Korrosionserscheinungen nach sich zieht.

Damit ist die Anwendung von billigeren Werkstoffen, wie gummiertem Stahl, ausgeschlossen. Selbst hochwertige Werkstoffe wie Legierungen aus Nickel, Chrom und Molybdän erreichen unter der thermischen Wechselbeanspruchung längere Standzeiten nur dann, wenn die korrodierenden Bestandteile im Gas und in der Flüssigkeit relativ harmloser Natur sind.

Durch die beschriebenen Erosions- bzw. Korrosionseffekte wird die Standzeit und damit die Verfügbarkeit der Stoffaustausch-Apparatur beeinträchtigt. Der Erfindung liegt die Aufgabe zugrunde, durch konstruktive Maßnahmen im Hinblick auf die Strömungsführung solche Korrosionserscheinungen zu minimieren und dadurch die Standzeiten zu verbessern.

Diese Aufgabe wird, ausgehend von der eingangs beschriebenen Vorrichtung erfindungsgemäß dadurch gelöst, daß der Abstand A zwischen zwei benachbarten Flüssigkeitsdüsen 5 kleiner ist als das 4-fache der Breite B des Ringraumes zwischen dem Gasschürzenrohr 8 und dem Wandbereich 14 mit dem größten Durchmesser der Einspritzkammer 2.

Es hat sich gezeigt, daß bei dieser Anordnung durch äußere Rückströmungen um die aus den Flüssigkeitsdüsen austretenden Flüssigkeitsstrahlen kleinere Flüssigkeitstropfen in großer Zahl nach oben getragen werden, von denen ein Teil auf die Innenfläche des Daches auftrifft, die dadurch gekühlt wird. Dabei wird die gesamte Innenfläche des Daches mit Flüssigkeit benetzt.

Die sich addierenden Schutzeinflüsse aus der Abschirmung durch das Schürzenrohr und aus der Kühlung durch Benetzung mit Flüssigkeit reichen aus, um hohe Standzeiten auch dann zu erreichen, wenn für die gesamte Innenfläche der Einspritzkammer billige und temperaturempfindliche Baumaterialien, wie gummierter Stahl, verwendet werden.

Die für den Betrieb optimale Länge des Gasschürzenrohres kann zweckmäßig durch Zwischenringe eingestellt werden.

Bei sehr heißen Gasströmen wird auch die Temperaturdifferenz zwischen der Außenseite des Gasschürzenrohres und der Temperatur in der Einspritzkammer sehr groß. Je höher diese Temperaturdifferenz ist, desto stärker ist erfahrungsgemäß die Außenfläche des Gasschürzenrohres der Korrosion ausgesetzt. In solchen Fällen hat es sich daher zur Vermeidung zu hoher Temperaturdifferenzen bewährt, wenn das Schürzenrohr auf ganzer Länge oder nur im unteren Teilbereich doppelwandig ausgeführt wird. Das äußere Rohr wird dann nur mäßig erwärmt, so daß die Flüssigkeit, die sich an der jeweiligen Unterkante sammelt, keine schwerwiegende Korrosion verursacht. Das Innenrohr bleibt dagegen auch bei hohen Temperaturen trocken und ist aus diesem Grund weitgehend korrosionsgeschützt.

Die mit der Erfindung erzielten Vorteile bestehen in erster Linie darin, daß die Verfügbarkeit der Anlage aufgrund der Maßnahmen zur Vermeidung oder Minimierung der Korrosion wesentlich verbessert werden kann. Dabei ist der konstruktive Aufwand verhältnismäßig gering. Außerdem ergeben sich durch die strömungstechnischen Maßnahmen die Möglichkeiten, kostengünstigere und chemisch beständige Werkstoffe einzusetzen, die nicht hochtemperaturfest zu sein brauchen. Insgesamt wird eine definierte und reproduzierbare Strömungsführung von Gas und Flüssigkeit erreicht. Damit wird auch eine scharfe und zeitlich stationäre Abgrenzung der trockenen und benetzten Wandzonen am unteren Rand des Schürzenrohres sichergestellt. Die unkontrollierte Benetzung von heißen Wandteilen wird praktisch unterbunden. Damit steht auch die gesamte Bauhöhe der Apparatur ab Unterkante des Schürzenrohres für den Stoffaustausch zur Verfügung.

Gleichzeitig werden durch die Anordnung der Düsen und des Schürzenrohres unerwünschte Schwingungen der Gassäule in der Anlage gedämpft.

Im folgenden wird ein Ausführungsbeispiel der Erfindung anhand von Zeichnungen näher erläutert. Es zeigen
- Fig. 1: eine schematische Seitenansicht der erfindungsgemäßen Stoffaustauschapparatur mit dem Gaszuführungsrohr der Einspritzkammer und dem Stoffaustauschkanal
- Fig. 2: eine Ansicht des ringförmigen Daches bzw. Deckels von unten in der Schnittebene A/A gemäß Fig. 1
- Fig. 3: eine schematische Seitenansicht einer Ausführungsform mit leicht austauschbarem Gasschürzenrohr
- Fig. 4: ein doppelwandiges Gasschürzenrohr und
- Fig. 5: ein in einem Teilbereich doppelwandig ausgeführtes Gasschürzenrohr.

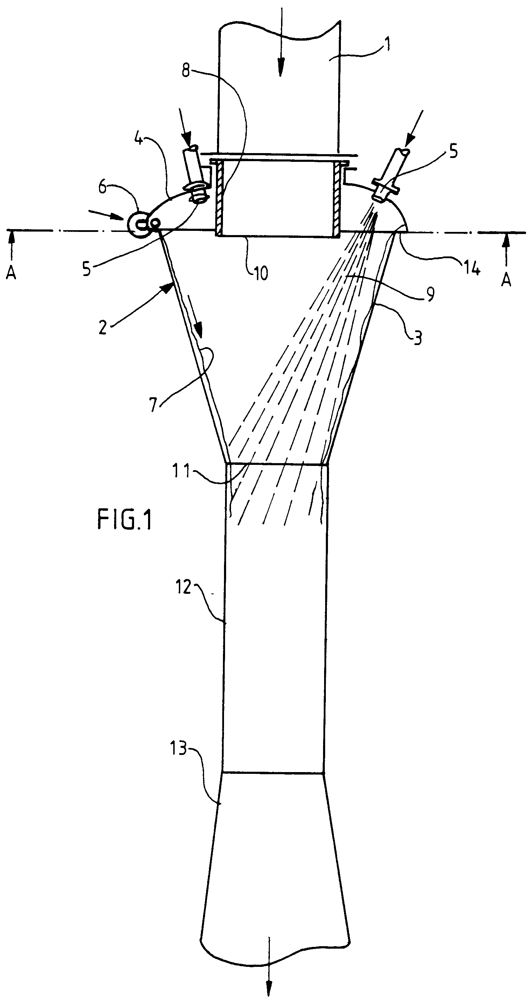

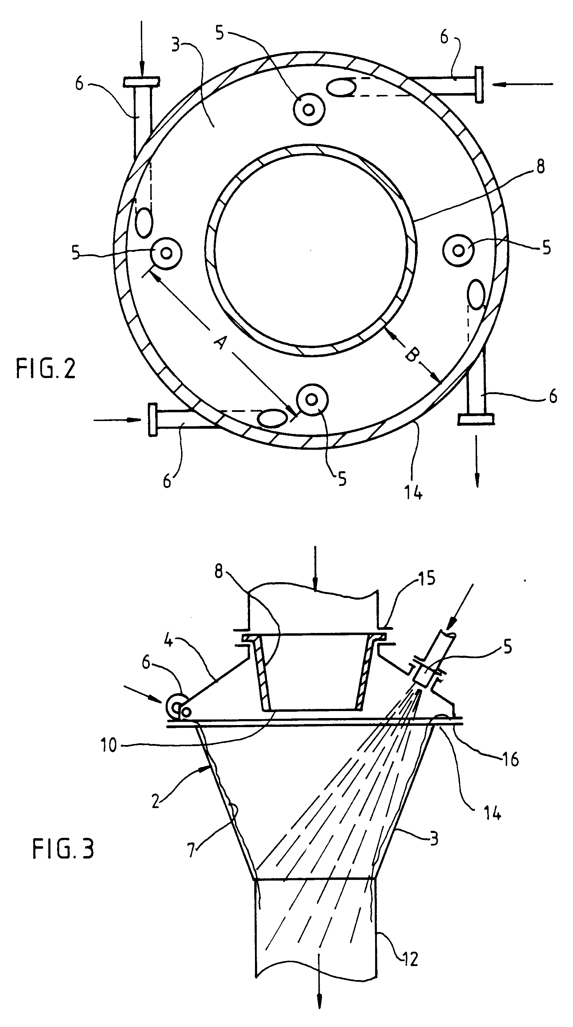

Bei der Heißgas-Stoffaustauschapparatur (Hochtemperatur-Quenche) gemäß Fig. 1 mündet vertikal von oben her ein Gaszuführungsrohr 1 in eine Einspritzkammer 2. Diese hat an ihrem oberen Ende einen wesentlich größeren Durchmesser als das Gaszuführungsrohr 1 und besteht aus einem sich in Strömungsrichtung konisch verengenden Teil 3 und aus einem gewölbten, sich an das Gaszuführungsrohr 1 anschließenden Dach 4. In das Dach 4 sind gleichmäßig über den Umfang verteilt mehrere Flüssigkeitsdüsen 5 eingesetzt, die über eine gemeinsame Leitung, z.B. mit Waschflüssigkeit, versorgt werden. Weiterhin sind im Bereich des größten Durchmessers des konischen Teils 2 Flüssigkeitszuführungen in Form von tangential einmündenden Rohren 6 vorgesehen (siehe auch Fig. 2), die dazu dienen auf der Innenfläche des konischen Teils 3 der Einspritzkammer 2 einen gleichmäßigen Wasserfallfilm 7 zu erzeugen, der für eine gute Kühlung sorgt.

Das Gaszuführungsrohr 1 ist an seinem unteren Ende in Form eines Gasschürzenrohres 8 in die Einspritzkammer 2 hinein verlängert. Dadurch sind die Flüssigkeitsdüsen 5 und der größte Teil der Dachfläche gegenüber dem Heißgas abgeschirmt. Die Länge des Schürzenrohres 8 und der Anstellwinkel der Düsen 5 sind so aufeinander abgestimmt, daß die austretenden divergenten Flüssigkeitsstrahlen 9 gerade noch den unteren Rand 10 des Schürzenrohres 8 passieren können. Der Sprühkegelwinkel der Düsen 5 ist so bemessen, daß jede Düse etwa die gesamte Querschnittsfläche 11 am unteren Ende des konischen Teils 3 überdeckt. Außerdem wird dadurch sichergestellt, daß beim Ausfall (Verstopfung) einer der parallel geschalteten Flüssigkeitsdüsen 5 keine merkliche Beeinträchtigung der Funktion eintritt. Ein weiterer Vorteil dieser Anordnung liegt darin, daß durch die Aufteilung der Flüssigkeit auf eine Vielzahl von Düsen kleinere Flüssigkeitströpfchen und damit eine größere Kontaktfläche erzeugt werden können. Da die Flüssigkeitsdüsen 5 abgeschirmt sind und nicht mehr in den heißen Gasraum hineinragen, sind Korrosionsprobleme an den Düsenhalterungen weitgehend eliminiert. Falls erforderlich, kann die Innenfläche des ringförmigen Daches 4 mittels zusätzlicher Düsen (nicht gezeigt) berieselt und gekühlt werden.

An die Querschnittsfläche 11 am unteren Ende der Einspritzkammer 2 schließt sich in bekannter Weise ein zylindrischer Stoffaustauschkanal 12 mit einem darauffolgenden Diffusor 13 an. Die Länge des gesamten Stoffaustauschkanals 12 und 13 ist üblicherweise so bemessen, daß einerseits der Heißgasstrom durch die Eindüsung von Wasch- bzw. Kühlflüssigkeit auf die gewünschte Endtemperatur (Sättigung des Gases mit Wasserdampf bei gleichzeitiger Kühlung auf den Wasserdampftaupunkt) abgekühlt wird und andererseits eine ausreichende Vorabsorption von im Rauchgas vorhandenen Schadstoffen wie HCl erfolgen kann. Es hat sich jedoch gezeigt, daß aufgrund der intensiven Vermischung und der Feinheit der Tropfen die Gesamtlänge des Stoffaustauschapparates verkürzt werden kann.

Wie in Fig. 2 gezeigt, sind die Flüssigkeitszuführungen 6 etwa in Höhe des Wandbereiches 14 mit dem größten Durchmesser der Einspritzkammer 2 tangential angebracht. Durch die tangentiale Einleitung erhält der Flüssigkeitsfallfilm 7 eine Drallkomponente, so daß sich ein stabiler dynamischer Rotationsfallfilm ausbildet.

In Fig. 2 sind ferner vier Flüssigkeitsdüsen 5 dargestellt, deren Abstand A kleiner gewählt wird als das 4fache der Breite B des Ringraumes zwischen dem Gasschürzenrohr 8 und dem Wandbereich 14 mit dem größten Durchmesser der Einspritzkammer. Es wurde gefunden, daß sich bei dieser Dimensionierung zwischen zwei benachbarten Düsenstrahlen eine nach oben gerichtete Rückströmung ausbildet, die einen ausreichend großen Feintropfenanteil an die Innenfläche des Daches 4 fördert, um das Dach kühl zu halten. Bei größeren Abständen A sind diese Rückströmungen nur noch schwach ausgeprägt, so daß evtl. eine Zusatzkühlung durch Bespülung der Dachinnenfläche erforderlich wird (siehe Seite 8).

Gemäß Fig. 3 ist das Gasschürzenrohr 8 mit einer lösbaren Verbindung 15 und das ringförmige Dach 4 mittels einer lösbaren Verbindung 16 montiert. Außerdem ist das Schürzenrohr 8 so kurz gehalten, daß sein unterer Rand 10 oberhalb der lösbaren Verbindung 16 liegt. Diese Ausführung gestattet es, das Dach 4 mit den Düsen 5 und den Flüssigkeitszuführungen 6 mitsamt dem Schürzenrohr 8 nach geringfügigem Anheben des Gaszuführungsrohres 1 seitlich aus der gesamten Einrichtung auszubauen, um beispielsweise Reparatur- oder Wartungsarbeiten durchzuführen. Die lösbaren Verbindungen 15 und 16 sind dabei übliche Flanschverschraubungen.

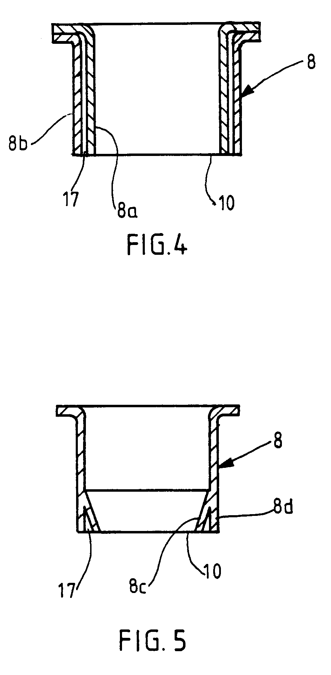

Gemäß Fig. 4 ist das Schürzenrohr 8 doppelwandig ausgebildet und besteht aus zwei konzentrischen Rohren 8a, 8b, die durch einen Spalt 17 voneinander getrennt sind.

Gemäß Fig. 5 ist nur der untere Bereich, d.h. die Austrittszone des Schürzenrohres 8, doppelwandig ausgeführt. Entsprechende Rohrstücke (Innenrohr und Außenrohr) sind hier mit 8c und 8d bezeichnet. Diese doppelwandigen Ausführungen stellen im Hinblick auf Korrosionsprobleme eine weitere Verbesserung dar. Normalerweise wird das Schürzenrohr 8 auf der Außenseite kaum benetzt. Lediglich in der Nähe der unteren Kante 10 sammelt sich erfahrungsgemäß etwas Flüssigkeit an, die sich dann in Tropfen ablöst. An dieser Stelle liegt die Grenze zwischen der trockenen und der nassen Fläche. Da das Schürzenrohr keiner mechanischen Belastung ausgesetzt ist, kann man für dieses Bauteil Werkstoffe, wie z.B. Graphit, Glas, Quarz oder auch bestimmte Kunststoffe einsetzen, die in hohem Maße korrosionsbeständig sind, aber nur eine verhältnismäßig geringe Festigkeit aufweisen. Da das Schürzenrohr nur eine Schutzfunktion hat, kann ein gewisser Abtrag durch Korrosion im unteren Bereich an der Außen- und Innenfläche, wie auch an der Unterkante hingenommen werden. Wenn diese Korrosionserscheinungen, insbesondere bei Hochtemperaturanwendungen, jedoch eliminiert oder weiter abgeschwächt werden sollen, sind die doppelwandigen Ausführungen des Schürzenrohres 8 gemäß Fig. 4 und Fig. 5 vorzuziehen. Aufgrund des Ringspaltes 17 erwärmt sich das äußere Rohr 8b bzw. 8d nur mäßig, so daß die Flüssigkeit, die sich an den Unterkanten dieser Rohrteile sammelt, keine erhebliche Korrosion verursacht. Dagegen bleiben die Innenrohre 8a bzw. 8c bei hoher Temperatur trocken und sind daher ebenfalls nur schwachen Korrosionsangriffen ausgesetzt. In den Zwischenraum zwischen den beiden Rohren 8a und 8b kann im Bedarfsfall ein Kühlmedium eingeführt werden.

Die beschriebene Vorrichtung zum Stoffaustausch zwischen einem heißen Gas und einer Flüssigkeit ist insbesondere zur Behandlung heißer Abgasströme bei Verbrennungsanlagen geeignet. Dabei erfolgt eine Abkühlung des Abgasstromes, während gleichzeitig darin enthaltene Schadstoffe wie z.B. HCl in der Flüssigkeit absorbiert und ausgeschieden werden. Als Flüssigkeit (Waschflüssigkeit) wird normalerweise Wasser eingesetzt. Die Waschflüssigkeit kann aber auch aus einer geeigneten Reaktionslösung bestehen, um eine gezielte Abscheidung bestimmter Schadstoffe im Heißgasstrom zu erreichen.

## Patentansprüche

1. Vorrichtung für den Stoffaustausch zwischen einem heißen Gasstrom und einer Flüssigkeit, bei der die Flüssigkeit in den Gasstrom eingespritzt wird, bestehend aus einem Gaszuführungsrohr (1), das vertikal in eine gegenüber dem Gaszuführungsrohr (1) erweiterte und sich in Strömungsrichtung verengende, koaxial dazu angeordnete Einspritzkammer (2) mündet, deren Oberteil durch ein ringförmiges Dach (4) mit darin eingesetzten Flüssigkeitsdüsen (5) gebildet wird, das mit dem Gaszuführungsrohr (1) verbunden ist und einem an die Einspritzkammer (2) koaxial anschließenden Wärme- und Stoffaustauschkanal (12, 13), wobei in Verlängerung des Gaszuführungsrohres (1) ein Gasschürzenrohr (8) in die Einspritzkammer (2) hineinragt, dadurch gekennzeichnet, daß der Abstand A zwischen zwei benachbarten Flüssigkeitsdüsen (5) kleiner ist, als das 4fache der Breite B des Ringraumes zwischen dem Schürzenrohr (8) und dem Wandbereich (14) mit dem größten Durchmesser der Einspritzkammer (2).

2. Vorrichtung nach Anspruch 1, dadurch gekennzeichnet, daß das Schürzenrohr (8) aus zwei durch einen Spalt (17) getrennten konzentrischen Rohren (8a, 8b) besteht.

3. Vorrichtung nach Anspruch 1 bis 2, dadurch gekennzeichnet, daß das Schürzenrohr (8) im unteren Bereich doppelwandig mit einem Außenrohrstück (8d) und einem Innenrohrstück (8c) ausgeführt ist.

4. Vorrichtung nach Anspruch 1 bis 3, dadurch gekennzeichnet, daß die Länge des Schürzenrohres (8) durch Zwischenringe einstellbar ist.

## Claims

1. Apparatus for mass transfer between a hot gas stream and a liquid, in which the liquid is injected into the gas stream, consisting of a gas feed pipe (1), which discharges vertically into an injection chamber (2) arranged coaxially with it, which is wider than the gas feed pipe (1) and converges conically in the flow direction, the upper part of the injection chamber (2) being formed by an annular roof (4) connected to the gas feed pipe (1) and having inserted liquid nozzles (5), and a heat- and mass-transfer duct (12, 13) connected coaxially to the injection chamber (2), wherein in extension of the gas feed pipe (1), a gas skirt tube (8) projects into the injection chamber (2) characterized in that the distance A between two adjacent liquid nozzles (5) is less than 4 times the width B of the annulus between the skirt tube (8) and the wall zone (14) of greatest diameter of the injection chamber (2).

2. Apparatus according to Claim 1, characterized in that the skirt tube (8) consists of two concentric tubes (8a, 8b) separated by a gap (17).

3. Apparatus according to Claims 1 to 2, characterized in that the skirt tube (8) is of double-walled construction in its lower zone, with an external length of tube (8d) and an internal length of tube (8c).

4. Apparatus according to Claims 1 to 3, characterized in that the length of the skirt tube (8) is adjustable by intermediate rings.

## Revendications

1. Dispositif de transfert de matière entre un courant gazeux chaud et un liquide, dans lequel le liquide est injecté dans le courant gazeux, se composant d'un tuyau d'admission de gaz (1) qui débouche verticalement dans une chambre d'injection (2) disposée coaxialement par rapport au tuyau d'admission de gaz (1) évasée par rapport à ce dernier et se rétrécissant dans la direction du courant et dont la partie supérieure est formée par une couronne annulaire (4) qui comporte des buses de liquide (5) incorporées et est reliée au tuyau d'admission de gaz (1), et d'un canal de transfert de chaleur et de matière (12, 13) faisant coaxialement suite à la chambre d'injection (2), un tuyau en jupe pour gaz (8) faisant saillie dans la chambre d'injection (2) dans le prolongement du tuyau d'admission de gaz (1), caractérisé en ce que la distance A entre deux buses de liquide (5) voisines est inférieure au quadruple de la largeur B de l'intervalle annulaire entre le tuyau en jupe (8) et la partie de plus grand diamètre (14) de la paroi de la chambre d'injection (2).

2. Dispositif selon la revendication 1, caractérisé en ce que le tuyau en jupe (8) se compose de deux tuyaux (8a, 8b) concentriques, séparés par un intervalle (17).

3. Dispositif selon les revendications 1 et 2, caractérisé en ce que le tuyau en jupe (8) est à double paroi dans sa partie inférieure, comportant un fragment de tuyau externe (8d) et un fragment de tuyau interne (8c).

4. Dispositif selon les revendications 1 à 3, caractérisé en ce que la longueur du tuyau en jupe (8) est réglable au moyen de bagues intermédiaires.
